# EUROPEAN PATENT SPECIFICATION

(11) **EP 2 770 562 B1**
(45) Date of publication and mention of the grant of the patent: **19.08.2015**
(21) Application number: 14153508.8
(22) Date of filing: 31.01.2014
(51) Int. Cl.: H01M 4/58, H01M 10/05

(54) **Nonaqueous electrolytic secondary battery**
Nicht-wässrige Elektrolyt-Sekundärbatterie
Batterie secondaire électrolytique non aqueuse

(30) Priority: 26.02.2013 JP 2013035779
(43) Date of publication of application: 27.08.2014
(73) Proprietor: Seiko Instruments Inc., Chiba-shi, Chiba (JP)
(72) Inventor: Sawayama, Takumi, Chiba-shi, Chiba (JP); Suzuki, Tadahito, Chiba-shi, Chiba (JP); Miura, Ken, Chiba-shi, Chiba (JP)
(74) Representative: Miller Sturt Kenyon

(56) References cited:
- EP-A1- 1 783 847
- EP-A1- 1 962 357
- US-A1- 2004 197 645
- US-A1- 2011 206 983

## Description

### BACKGROUND OF THE INVENTION

### Field of the Invention

The present invention relates to nonaqueous electrolytic secondary batteries.

### Background Art

Nonaqueous electrolytic secondary batteries are used in applications such as the power supply of electronic devices, and a power storage for absorbing the output fluctuations of a power-generating unit. For example, coin-shaped, button-shaped, and other small nonaqueous electrolytic secondary batteries are widely used in portable devices or the like (see, for example, JP-A-10-162828).

The nonaqueous electrolytic secondary battery of JP-A-10-162828 is structured to include a positive electrode, a negative electrode, and an electrolyte stored inside a storage space surrounded by a positive electrode case and a negative electrode case. The positive electrode case and the negative electrode case are electrically connected to a positive electrode and a negative electrode, respectively. A terminal or the like is optionally welded to one of or both of the positive electrode case and the negative electrode case for easier electrical connection to outside.

The characteristics of a nonaqueous electrolytic secondary battery depend on such factors as the type of the electrode active material, and the type and the concentration of the electrolyte. For example, a sufficient discharge capacity can be obtained when SiOₓ (0 ≤ x < 2) is used as the negative electrode active material. Further, for example, when the electrolyte is an electrolytic solution prepared by dissolving a supporting electrolyte in a nonaqueous solvent, increasing the concentration of the supporting electrolyte lowers the internal resistance, and can improve battery characteristics.

As described above, the characteristics of a nonaqueous electrolytic secondary battery can improve with the use of the SiOₓ-containing negative electrode active material, and an electrolyte having a high supporting electrolyte concentration. However, such a nonaqueous electrolytic secondary battery is associated with problems, such as rupture and leakage, which may occur when the negative electrode case is subjected to a heat treatment such as welding. In view of preventing such problems, it may not be always possible to increase the concentration of the supporting electrolyte as much as it is needed for characteristics improvement.

### SUMMARY OF THE INVENTION

Under these circumstances, there is a need for a nonaqueous electrolytic secondary battery of improved characteristics.

According to a first aspect of the present invention, there is provided a nonaqueous electrolytic secondary battery that includes:
a positive electrode case;
a negative electrode case fixed to the positive electrode case, and that forms a storage space with the positive electrode case in between the negative electrode case and the positive electrode case;
a positive electrode portion provided on the positive electrode case in the storage space, and that contains a lithium compound as positive electrode active material;
a negative electrode portion provided on the negative electrode case in the storage space, and that contains SiOₓ (0 ≤ x < 2) as negative electrode active material; and
a nonaqueous electrolyte stored inside the storage space,
the negative electrode case including:
   a base layer; and
   a nickel layer disposed opposite the storage space with respect to the base layer, and that has a higher thermal conductivity than the base layer, and a thickness of 2.6 µm or more.

In the nonaqueous electrolytic secondary battery, the nickel layer having a higher thermal conductivity than the base layer and a thickness of 2.6 µm or more is disposed opposite the storage space with respect to the base layer, and thus suppresses transfer of heat to the storage space via the base layer. It is therefore possible to suppress thermal expansion of an object stored inside the storage space, and gas generation from the object. Problems such as rupturing of the battery can thus be suppressed. This makes it possible to increase the concentration of the supporting electrolyte in the nonaqueous electrolyte while suppressing heat problems, and realize a nonaqueous electrolytic secondary battery of excellent characteristics.

The nonaqueous electrolytic secondary battery according to the first aspect of the present invention may include a terminal attached to the negative electrode case by heat treatment outside the storage space. In this way, the nonaqueous electrolytic secondary battery can charge and discharge via the terminal, and can have improved usability.

In the nonaqueous electrolytic secondary battery according to the first aspect of the present invention, the terminal may be welded to the negative electrode case at a peel strength of 2 kgf or more against the negative electrode case. In this way, detachment of the terminal from the negative electrode case can be suppressed in the nonaqueous electrolytic secondary battery.

In the nonaqueous electrolytic secondary battery according to the first aspect of the present invention, the negative electrode case may include a clad material that has a thickness of 130 µm or more, and the base layer may be a stainless steel layer contained in the clad material. This helps maintain the strength of the negative electrode case in the nonaqueous electrolytic secondary battery.

In the nonaqueous electrolytic secondary battery according to the first aspect of the present invention, the proportion of the thickness of the nickel layer in the thickness of the clad material may be 2% or more. In this way, transfer of heat to the storage space via the base layer can be greatly suppressed in the nonaqueous electrolytic secondary battery.

In the nonaqueous electrolytic secondary battery according to the first aspect of the present invention, the thickness of the clad material may be 200 µm or less, and the thickness of the nickel layer may be 16 µm or more. In this way, transfer of heat to the storage space via the base layer can be greatly suppressed in the nonaqueous electrolytic secondary battery.

The present invention can provide a nonaqueous electrolytic secondary battery of excellent characteristics.

### BRIEF DESCRIPTION OF THE DRAWINGS

Embodiments of the present invention will now be described by way of further example only and with reference to the accompanying drawings, in which:
FIG. 1 is a plan view illustrating a nonaqueous electrolytic secondary battery of an embodiment of the present invention.
FIG. 2 is a cross sectional view illustrating the nonaqueous electrolytic secondary battery of the embodiment of the present invention.
FIG. 3 is a magnified cross sectional view of a negative electrode case and a terminal.
FIG. 4 is a graph representing the percentage defect of Example and Comparative Example.
FIG. 5 is a graph representing the percentage defect at different thicknesses of the nickel layer.

### DESCRIPTION OF THE PREFERRED EMBODIMENT

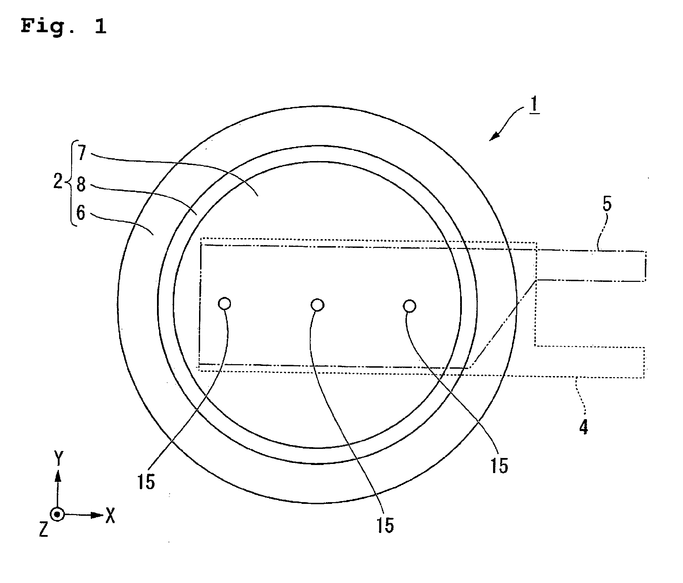

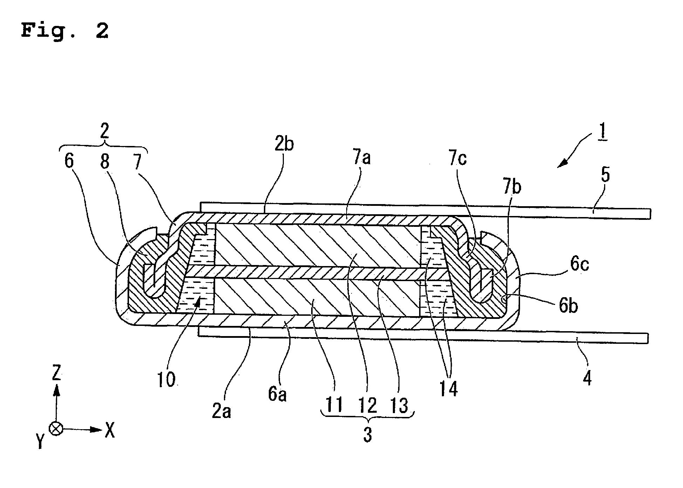

An embodiment of the present invention is described below. FIG. 1 is a plan view illustrating a nonaqueous electrolytic secondary battery 1 of the present embodiment. FIG. 2 is a cross sectional view of the nonaqueous electrolytic secondary battery 1.

The nonaqueous electrolytic secondary battery 1 (hereinafter, simply "battery 1") shown in FIG. 1 is what is known as a coin-shaped lithium ion secondary battery. As illustrated in FIG. 2, the battery 1 includes a battery case 2, a battery element 3 contained inside the battery case 2, and terminals 4 and 5 attached to the battery case 2. The battery 1 can charge and discharge the battery element 3 via the terminals 4 and 5.

The battery case 2 is substantially disc-like in shape, and has a pair of circular surfaces, and a cylindrical side surface. For convenience of explanation, one of the circular surfaces will be referred to as bottom surface 2a, and the other top surface 2b. The battery case 2 includes a positive electrode case 6 that includes the bottom surface 2a, a negative electrode case 7 that includes the top surface 2b, and a gasket 8.

The positive electrode case 6 and the negative electrode case 7 each have a form of a closed-end cylinder. The maximum inner diameter of the positive electrode case 6 is larger than the maximum outer diameter of the negative electrode case 7. The negative electrode case 7 is inserted into the positive electrode case 6 from the opposite side of the top surface 2b (from the opening side). The positive electrode case 6 is swaged inward at the circumference portion of its opening, preventing the negative electrode case 7 from coming off the opening of the positive electrode case 6. The negative electrode case 7 is a lid-like member for closing the opening of the positive electrode case 6. A storage space 10 is formed between the negative electrode case 7 and the positive electrode case 6.

The positive electrode case 6 has a bottom portion 6a that includes the bottom surface 2a, and a side wall portion 6c that includes an inner circumferential surface 6b (side surface). The positive electrode case 6 is conductive at at least the bottom portion 6a. The positive electrode case 6 is made of metallic material such as stainless steel, and includes the bottom portion 6a and the side wall portion 6c as an integral unit.

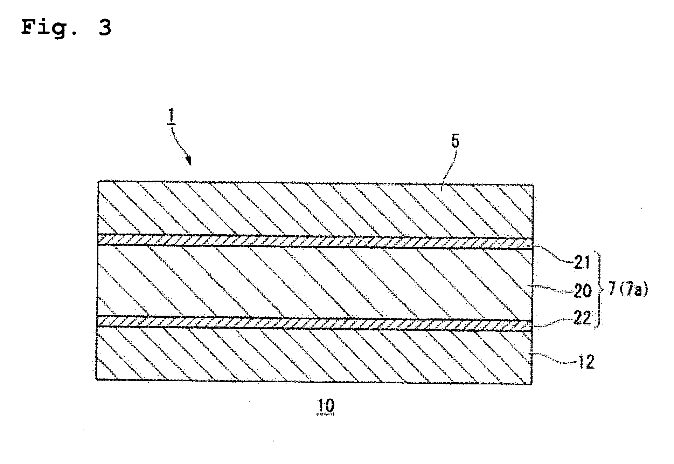

The negative electrode case 7 has a lid portion 7a that includes the top surface 2b, and a side wall portion 7c that includes an outer circumferential surface 7b (side surface). The negative electrode case 7 is conductive at at least the lid portion 7a. The negative electrode case 7 is structured as a laminate of a plurality of metal layers layered in the thickness direction, and the metal layers have different thermal conductivities. The structure of the negative electrode case 7 will be described later in greater detail with reference to FIG. 3 and elsewhere.

The gasket 8 is provided between the inner circumferential surface 6b of the positive electrode case 6 and the outer circumferential surface 7b of the negative electrode case 7. The gasket 8 is a so-called sealing member, fixing the positive electrode case 6 and the negative electrode case 7 to each other, and sealing the storage space 10 airtight. The gasket 8 is made of insulating material, and prevents shorting of the positive electrode case 6 and the negative electrode case 7.

Examples of the material of the gasket 8 include polypropylene (PP), polyphenylsulfide (PPS), polyethylene terephthalate (PET), polyamide (PA), liquid crystal polymer (LCP), tetrafluoroethylene-perfluoroalkyl vinyl ether copolymer resin (PFA), polyetheretherketone resin (PEEK), polyethernitrile resin (PEN), polyetherketone resin (PEK), polyallylate resin, polybutylene terephthalate resin (PBT), polycyclohexane dimethylene terephthalate resin, polyethersulfone resin (PES), polyaminobismaleimide resin, polyetherimide resin, and fluororesin. When subjected to a heat treatment such as a reflow process, the material of the gasket 8 is selected by taking into consideration the processing temperature of the heat treatment (heat resistance in the heat treatment).

The battery element 3 is contained (sealed) inside the storage space 10 between the negative electrode case 7 and the positive electrode case 6. The battery element 3 includes a positive electrode portion 11, a negative electrode portion 12, a separator 13, and a nonaqueous electrolyte 14. The battery element 3 can accumulate charges (charging) and release charges (discharge) by allowing lithium ions to move between the positive electrode portion 11 and the negative electrode portion 12.

The positive electrode portion 11 is provided on the positive electrode case 6, inside the storage space 10 (inside the battery case 2), and is in contact with the positive electrode case 6. The terminal 4 (positive electrode-side terminal) shown in FIGS. 1 and 2 is attached to the bottom surface 2a of the positive electrode case 6, and is in electrical communication with the positive electrode portion 11 via the bottom portion 6a of the positive electrode case 6.

The positive electrode portion 11 contains a lithium compound as positive electrode active material. The lithium compound is a multiple oxide containing lithium and a transition metal, for example, such as lithium titanate, and lithium manganate. The positive electrode portion 11 of the present embodiment is a lithium titanate-containing pellet (positive electrode pellet), and is press bonded to the bottom portion 6a of the positive electrode case 6.

The positive electrode pellet (positive electrode portion 11) is produced, for example, by molding a positive electrode mixture into the desired shape under pressure. The positive electrode mixture contains, for example, a granular positive electrode active material, and may contain a conductive auxiliary agent and/or a positive electrode binder. The molding pressure under pressure is decided, for example, according to such factors as the type of the conductive auxiliary agent, and may be 0.2 to 5 ton/cm².

The proportion (content) of the positive electrode active material in the positive electrode pellet (positive electrode mixture) is decided according to such factors as the discharge capacity required of the battery 1, and may be 50 to 95 mass%, and 70 to 88 mass%. It becomes easier to maintain discharge capacity at or above these lower limits, whereas molding of the positive electrode portion 11 becomes easier at or below the foregoing upper limits.

The conductive auxiliary agent may contain one or more carbon materials such as furnace black, Ketjen black, acetylene black, and graphite. The content of the conductive auxiliary agent in the positive electrode pellet (positive electrode mixture) may be 4 to 40 mass%, and 10 to 20 mass%. It becomes easier to maintain the conductivity of the positive electrode portion 11 and mold the positive electrode portion 11 into a form of a pellet at or above these lower limits, whereas the discharge capacity of the positive electrode portion 11 can more easily be maintained at or below the foregoing upper limits.

The positive electrode binder may contain at least one selected from polymers (such as polytetrafluoroethylene (PTFE), polyvinylidene fluoride (PVDF), styrene-butadiene rubber (SBR), and polyacrylic acid (PA)), carboxymethylcellulose (CMC), and polyvinyl alcohol (PVA).

For example, the positive electrode binder may contain polyacrylic acid, particularly crosslinked polyacrylic acid. When using polyacrylic acid, the polyacrylic acid may be brought to pH 3 to 10 in advance. The pH may be adjusted with alkali metal hydroxides such as lithium hydroxide, and alkali earth metal hydroxides such as magnesium hydroxide. The content of the positive electrode binder in the positive electrode pellet (positive electrode mixture) may be 1 to 20 mass%.

The positive electrode portion 11 may be configured to include a layer of a positive electrode mixture formed on a collector made of conductive materials such as a conductive resin adhesive (containing carbon as a conductive filler), aluminum, and copper. The collector may be a separate member from the positive electrode case 6, or may be at least a part of the positive electrode case 6. For example, the positive electrode portion 11 may be configured by layering a positive electrode mixture on the positive electrode case 6, using the surface layer of the positive electrode case 6 as a collector.

The negative electrode portion 12 is provided on the negative electrode case 7, inside the storage space 10, and is in contact with the negative electrode case 7. The terminal 5 (negative electrode-side terminal) shown in FIGS. 1 and 2 is attached to the top surface 2b of the negative electrode case 7, and is in electrical communication with the negative electrode portion 12 via the lid portion 7a of the negative electrode case 7.

The negative electrode portion 12 contains a SiOₓ (0 ≤ x < 2)-containing negative electrode active material. The negative electrode portion 12 of the present embodiment is a SiOₓ-containing pellet (negative electrode pellet), and is press bonded to the lid portion 7a of the negative electrode case 7.

The negative electrode pellet is produced, for example, by molding a negative electrode mixture into the desired shape under pressure. The negative electrode mixture contains, for example, a granular negative electrode active material, and may contain a conductive auxiliary agent and/or a negative electrode binder. The proportion (content) of the negative electrode active material in the negative electrode pellet (negative electrode mixture) may be, for example, 40 to 85 mass%. The content of the negative electrode active material in the negative electrode pellet is determined, for example, according to such factors as the conductivity of the negative electrode active material. When the negative electrode active material used has low conductivity, the content may be increased, for example, when the material is surface coated with carbon to increase the actual conductivity.

The conductive auxiliary agent may contain one or more carbon materials such as furnace black, Ketjen black, acetylene black, and graphite.

The negative electrode binder may contain at least one of polyvinylidene fluoride (PVDF), styrene-butadiene rubber (SBR), polyacrylic acid (PA), carboxymethylcellulose (CMC), polyimide (PI), and polyamideimide (PAI).

For example, the binder may contain polyacrylic acid, particularly crosslinked polyacrylic acid. When using polyacrylic acid, the polyacrylic acid may be brought to pH 3 to 10 in advance. The pH may be adjusted with alkali metal hydroxides such as lithium hydroxide, and alkali earth metal hydroxides such as magnesium hydroxide.

The separator 13 is provided between the positive electrode portion 11 and the negative electrode portion 12, and has the property to allow lithium ions to pass therethrough. The separator 13 may contain a glass nonwoven fabric and/or a resin nonwoven fabric. Because of the excellent mechanical strength and the large ion permeation rate, the glass nonwoven fabric can reduce internal resistance and improve discharge capacity. The thickness of the separator 13 is decided by taking into consideration such factors as the size of the battery 1, and the material of the separator 13, and is, for example, 5 to 300 µm.

The material of the glass nonwoven fabric used for the separator 13 may contain at least one of borosilicate glass, alkali glass, fused quartz, and lead glass. The material of the resin nonwoven fabric used for the separator 13 may contain at least one of polypropylene (PP), polyphenylene sulfide (PPS), polyetheretherketone (PEEK), polyethylene terephthalate (PET), polyamideimide (PAI), and polyimide (PI).

The nonaqueous electrolyte 14 of the present embodiment is an electrolytic solution prepared by dissolving a supporting electrolyte in a nonaqueous solvent. The positive electrode portion 11, the negative electrode portion 12, and the separator 13 are at least partially immersed in the nonaqueous electrolyte 14. The lithium ions responsible for the charge movement in the battery 1 move between the positive electrode portion 11 and the negative electrode portion 12 via the nonaqueous electrolyte 14.

The nonaqueous solvent used for the nonaqueous electrolyte 14 may contain at least one of carbonates (such as ethylene carbonate (EC), propylene carbonate (PC), 1,2-butylene carbonate (BC), vinylene carbonate (VC), dimethyl carbonate (DMC), diethyl carbonate (DEC), and ethylmethyl carbonate(EMC)), γ-butyrolactone (GBL), sulfolane (SL), 1,2-dimethoxyethane (DME), 1,2-diethoxyethane (DEE), 1,2-ethoxymethoxyethane (EME), tetrahydrofuran (THF), and 1,3-dioxolan (DOL).

The supporting electrolyte used for the nonaqueous electrolyte 14 may contain an organic acid lithium salt and/or an inorganic acid lithium salt. The organic acid lithium salt may include at least one of LiCH₃SO₃, LiCF₃SO₃, LiN(CF₃SO₂)₂, LiN(C₂F₅SO₂)₂, LiC(CF₃SO₂)₃, LiN(CF₃SO₃)₂, and LiN(FSO₂)₂. The inorganic acid lithium salt may include at least one of LiPF₆, LiBF₄, LiB(C₆H₅)₄, LiCl, and LiBr. The nonaqueous electrolyte 14 can have improved lithium ion conductivity when at least one of LiN(CF₃SO₂)₂, LiN(FSO₂)₂, and LiBF₄ is used. When LiN(CF₃SO₂)₂ is used, the nonaqueous electrolyte 14 can have improved heat resistance and low moisture reactivity, and can thus improve the storage characteristic.

The content (concentration) of the supporting electrolyte in the nonaqueous electrolyte 14 is decided, for example, by taking into consideration such factors as the type of the supporting electrolyte, and the conductivity required of the nonaqueous electrolyte 14. When a lithium salt is used as the supporting electrolyte, the concentration of the supporting electrolyte in the nonaqueous electrolyte 14 may be, for example, 0.5 to 3.5 mol/L, 0.5 to 3.0 mol/L, or 1 to 2.5 mol/L.

The battery case 2, the terminal 4, and the terminal 5 shown in FIGS. 1 and 2 are described below. As illustrated in FIG. 1, the terminals 4 and 5 project out of the contour of the battery case 2 in planar view. In the following, the end of the terminals 4 and 5 outside the contour of the battery case 2 in planar view will be referred to as the tip, and the opposite end of the tip will be referred to as the base end. As used in the present embodiment, "planar view" is the view of the battery case 2 as viewed in thickness direction (Z axis direction in the figures).

Referring to FIG. 1, the terminals 4 and 5 are substantially plate-like members, extending substantially parallel to each other in the form of a band. The terminals 4 and 5 project out of the contour of the battery case 2 in the same direction. The terminals 4 and 5 have narrower widths toward the tip from the base end, and the tips of the terminals 4 and 5 do not overlap each other in planar view. The terminals 4 and 5 are made of conductive material, for example, such as stainless steel, and each have a thickness of about 100 µm to 150 µm. The shape and the dimensions of the terminals 4 and 5 may be appropriately changed.

The terminal 5 on the negative electrode side is attached to the negative electrode case 7 by being welded. Here, the terminal 5 is welded to the top surface 2b of the negative electrode case 7 by laser spot welding. Welding is made at a plurality of welding points 15 along the direction from the base end toward the tip of the terminal 5 (longitudinal direction, X axis direction in the figure). The welding points 15 are disposed substantially at the center with respect to the shorter side as opposed to the longer side of the terminal 5. Similarly, the terminal 4 on the positive electrode side is welded to the bottom surface 2a of the positive electrode case 6 by laser spot welding.

The terminal 5 is welded to the negative electrode case 7 at a peel strength of, for example, 2 to 4 kgf against the negative electrode case 7. In this embodiment, the peel strength against the negative electrode case 7 is about 3 kgf. With a peel strength of 2 kgf or more against the negative electrode case 7, detachment of the terminal 5 from the negative electrode case 7 can be suppressed. The heat input to the negative electrode case 7 by the welding can be reduced when the peel strength is 4 kgf or less.

Generally, the conductivity of the electrolyte becomes a maximum with the supporting electrolyte concentration as determined by such factors as the type of the supporting electrolyte. Accordingly, from the standpoint of lowering the resistance of the electrolyte, the supporting electrolyte concentration has an optimum value. However, in view of preventing problems, it may not be always possible to increase the supporting electrolyte concentration as much as it is needed (optimum value) for characteristics improvement.

With the structure of the negative electrode case 7 described below with reference to FIG. 3, the heat of a heat treatment does not easily transfer to the storage space 10 in the battery 1 of the present embodiment. This suppresses the heat problems, and, for example, allows the supporting electrolyte concentration to be increased toward the optimum value desired for characteristics improvement. A nonaqueous electrolytic secondary battery of excellent characteristics can thus be realized.

FIG. 3 is a magnified cross sectional view of the negative electrode case 7 and the terminal 5. The negative electrode case 7 includes a base layer 20, and a nickel layer 21 disposed opposite the storage space 10 (negative electrode portion 12) with respect to the base layer 20.

The base layer 20 is made of conductive material, for example, the same material (stainless steel) used for the terminal 5. In the following, the base layer 20 is also referred to as stainless steel layer. The base layer 20 of the present embodiment represents the thickest layer among the metal layers contained in the negative electrode case 7. The thickness of the base layer 20 is determined, for example, by taking into consideration such factors as the size and the strength of the negative electrode case 7, and may be 70% to 98% of the thickness of the negative electrode case 7.

The nickel layer 21 is made of nickel having higher thermal conductivity than the base layer 20 (stainless steel layer), and has a thickness of 2.6 µm or more. Among the metal layers contained in the negative electrode case 7, the nickel layer 21 of the present embodiment is closest in position to the boundary of the negative electrode case 7 and the terminal 5. One surface of the nickel layer 21 is adjacent to the base layer 20, whereas the other surface is adjacent to the terminal 5 in the thickness direction. That is, the nickel layer 21 includes the surface welded to the terminal 5.

The proportion of the thickness of the nickel layer 21 with respect to the thickness of the negative electrode case 7 may be 2% or more. For example, when the negative electrode case 7 has a thickness of 130 µm, and the thickness proportion of the nickel layer 21 is 2%, the nickel layer 21 has a thickness of 2.6 µm. It follows from this that the thickness of the nickel layer 21 exceeds 2.6 µm when the thickness of the negative electrode case 7 and/or the thickness proportion of the nickel layer 21 are/is increased.

The thickness proportion of the nickel layer 21 with respect to the thickness of the negative electrode case 7 may be 8% or more. For example, when the negative electrode case 7 has a thickness of 200 µm, and the thickness of the nickel layer 21 is 16 µm, the thickness proportion of the nickel layer 21 is 8%. It follows from this that the thickness proportion of the nickel layer 21 exceeds 8% when the thickness of the negative electrode case 7 is decreased, or when the thickness of the nickel layer 21 is increased.

The negative electrode case 7 of the present embodiment includes a copper layer 22 disposed on the same side as the storage space 10 with respect to the base layer 20. Specifically, the negative electrode case 7 has a three-layer structure of the base layer 20, the nickel layer 21, and the copper layer 22.

One surface of the copper layer 22 is adjacent to the base layer 20, whereas the other surface is adjacent to the negative electrode portion 12 in the thickness direction. In the present embodiment, the copper layer 22 has the highest conductivity among the metal layers contained in the negative electrode case 7. For example, the copper layer 22 may serve to lower the resistance of the negative electrode case 7 in the thickness direction, or may serve as at least a part of the collector of the negative electrode portion 12. The copper layer 22 may be omitted.

The negative electrode case 7 of the present embodiment is formed, for example, by bending a clad material. The clad material is a composite material of bonded different metals. For example, the clad material is produced by press bonding laminated metal layers (metal plates or metal foils) after a surface activation treatment. The clad material may include an alloy layer where the metal atoms of the overlying and underlying different metal layers are diffused. For this reason, the thickness of the metal layer in the clad material is given as the product of the thickness proportion of the metal layer in the total metal layer thickness before press bonding and the total thickness of the clad material after press bonding.

For example, the clad material as the base material of the negative electrode case 7 of the present embodiment is produced by press bonding a stainless steel material (base layer 20) with a copper material (copper layer 22) and a nickel material (nickel layer 21) after laminating these metal materials on the both surfaces of the stainless steel material. Assume here that the thickness ratio of the nickel material, the stainless steel material, and the copper material before press bonding is 16:76:8, and that the thickness of the resulting clad material is 200 µm. In this case, the proportion of the nickel material in the total thickness of the metal materials before press bonding is 8/100, and accordingly the thickness of the nickel layer in the clad material translates into 16 µm (200 µm x 8/100).

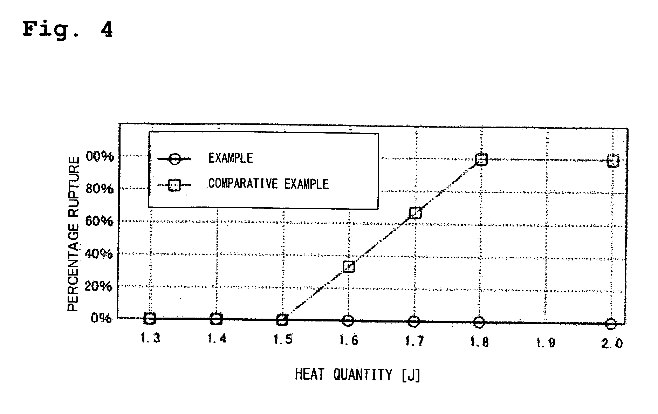

Examples of the present invention are described below. FIG. 4 is a graph representing the percentage defect of Example and Comparative Example. In the graph of FIG. 4, the horizontal axis represents the heat quantity of the welding of the terminal to the negative electrode case, and the vertical axis represents the frequency of a battery case rupture (percentage rupture). The percentage rupture is represented by M/N x 100 (%), where N is the number of samples tested, and M is the number of ruptured samples.

In the Example represented in FIG. 4, the negative electrode case 7 has a thickness of 200 µm, the thickness ratio of the copper layer 22, the stainless steel base layer 20, and the nickel layer 21 is 16:76:8, and the thickness of the stainless steel terminal 5 is 100 µm. Specifically, in the Example, the negative electrode case 7 (clad material) has a thickness of 200 µm or less, and the nickel layer 21 has a thickness of 16 µm or more. In the Comparative Example of FIG. 4, the thicknesses of the negative electrode case and the terminal are the same as in Example; however, the nickel layer is a 1 µm-thick layer formed by plating.

In the Comparative Example in which the nickel layer was formed as a 1 µm-thick layer, the battery case ruptured when the welding heat quantity became 1.6 J or more. Linear interpolation suggests that a battery case rupture occurs when the heat quantity exceeds about 1.5 J. The welding heat quantity that can maintain the peel strength between the negative electrode case and the terminal is, for example, 1.65 J. In Comparative Example, the expected percentage rupture is about 50% when the welding heat quantity is 1.65 J to maintain the peel strength between the battery case and the terminal.

In the Example according to the present embodiment, there was hardly any rupture in the battery case 2 until at least 2.0 J after the welding heat quantity exceeded 1.5 J. It is thus expected that there will be essentially no rupture in the battery case 2 even when the welding heat quantity is set to 1.65 J to maintain the peel strength between the battery case 2 and the terminal 5. As demonstrated above, the present embodiment can suppress a battery case rupture due to the heat of welding.

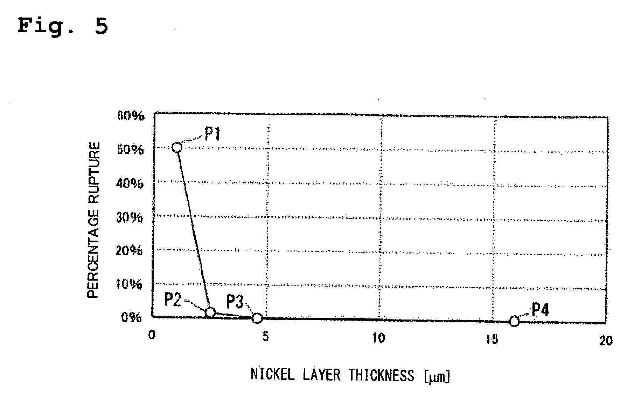

FIG. 5 is a graph representing the percentage defect at various thicknesses of the nickel layer. In the graph of FIG. 5, the horizontal axis represents the nickel layer thickness, and the vertical axis represents the frequency of a battery case rupture (percentage rupture). The data used to create the graph of FIG. 5 were obtained at the predetermined welding heat quantity that can maintain at least the predetermined peel strength between the negative electrode case and the terminal. The predetermined peel strength is, for example, 2 to 4 kgf, and is 3 kgf in this example.

Each plot in the graph of FIG. 5 is based on data obtained under the following test conditions.

### Plot P1

### Negative electrode case: stainless steel layer and nickel layer

Stainless steel layer thickness: 200 µm
Nickel layer thickness: 1 µm

### Plot P2

Negative electrode case: clad material (thickness 130 µm) of copper layer, stainless steel layer, and nickel layer
Copper layer thickness: 9.1 µm
Stainless steel layer thickness: 118.3 µm
Nickel layer thickness: 2.6 µm (thickness proportion is 2%)

### Plot P3

Negative electrode case: clad material (thickness 230 µm) of copper layer, stainless steel layer, and nickel layer
Copper layer thickness: 9.1 µm
Stainless steel layer thickness: 209.3 µm
Nickel layer thickness: 4.6 µm (thickness proportion is 2%)

### Plot P4

Negative electrode case: Clad material (thickness 200 µm) of copper layer, stainless steel layer, and nickel layer
Copper layer thickness: 32 µm
Stainless steel layer thickness: 152 µm
Nickel layer thickness: 16 µm (thickness proportion is 8%)

As shown in FIG. 5, the percentage rupture is about 50% in plot P1 in which the nickel layer thickness is 1 µm, whereas the percentage rupture is about 1% in plot P2 in which the nickel layer thickness is 2.6 µm. It can be seen from this that the percentage rupture greatly decreases when the nickel layer thickness is 2.6 µm or more. The percentage rupture is almost 0% in plot P3. It can be seen from plot P2 and plot P3 that the thickness proportion of the nickel layer should be 2% or more. As can be seen from plot P4, the percentage rupture can be greatly reduced when the thickness proportion of the nickel layer is 8% or more (16 µm or more).

It should be noted that the technical scope of the present invention is not limited to the embodiment described above. For example, one or more elements described in the foregoing embodiment may be omitted. Further, the various elements described in the foregoing embodiment may be appropriately combined.

The nonaqueous electrolytic secondary battery 1, described as having the terminals 4 and 5, may include either one of or neither of the terminals 4 and 5. For example, the nonaqueous electrolytic secondary battery 1 may be adapted so that it is shipped without terminals, and terminals may be, for example, welded by a user, as required. The nonaqueous electrolytic secondary battery 1 can suppress not only the problems caused by the welding of terminals, but problems caused by a heat treatment such as a reflow process.

In the nonaqueous electrolytic secondary battery 1, the negative electrode case 7 is formed of clad material, and the nickel layer 21 represents one of the metal layers contained in the clad material. However, the nickel layer 21 may be formed by a method such as plating. Further, the nickel layer 21 contained in the negative electrode case 7 may be a single layer or multiple layers. When more than one nickel layer is disposed opposite the storage space 10 with respect to the base layer 20, the thickness of the nickel layer 21 may be defined as the total thickness of these nickel layers.

In the foregoing embodiment, the thickness of the metal layer in the clad material is calculated from the thickness ratio before press bonding and the thickness of the clad material. However, the metal layer thickness may be measured by using devices such as an X-ray fluorescence thickness meter, an X-ray diffraction device (XRD), and an X-ray photoelectron spectrometer (XPS). When the adjacent two metal layers are alloyed in the vicinity of the metal layer boundary, the position of the alloy layer where the composition ratio (the ratio of the number of atoms) of the two metals reverses may be defined as the boundary, and the thickness of each metal layer may be defined by using this boundary as a reference.

The nonaqueous electrolytic secondary battery 1 is described as having a coin structure. However, the invention is not limited to this particular embodiment.

Such small nonaqueous electrolytic secondary batteries are often installed by using a method such as laser welding, and the problems caused by the heat of such processes can be suppressed.

## Claims

1. A nonaqueous electrolytic secondary battery (1), comprising:
a positive electrode case (6);
a negative electrode case (7), which is fixed to the positive electrode case and forms a storage space (10) with the positive electrode case in between the negative electrode case and the positive electrode case;
a positive electrode portion (11), which is provided on the positive electrode case in the storage space and contains a lithium compound as positive electrode active material;
a negative electrode portion (12), which is provided on the negative electrode case in the storage space and contains SiOₓ (0 ≤ x < 2) as negative electrode active material; and
a nonaqueous electrolyte stored inside the storage space,
the negative electrode case including:
a base layer (20); and
a nickel layer (21), which is disposed opposite the storage space with respect to the base layer and has a higher thermal conductivity than the base layer, and a thickness of 2.6 µm or more.

2. The nonaqueous electrolytic secondary battery according to claim 1, further comprising a terminal (5) attached to the negative electrode case by heat treatment outside of the storage space.

3. The nonaqueous electrolytic secondary battery according to claim 2, wherein the terminal (5) is welded to the negative electrode case (7) at a peel strength of 2 kgf or more against the negative electrode case.

4. The nonaqueous electrolytic secondary battery according to any one of claims 1 to 3,
wherein the negative electrode case (7) includes a clad material that has a thickness of 130 µm or more, and
wherein the base layer (20) is a stainless steel layer contained in the clad material.

5. The nonaqueous electrolytic secondary battery according to claim 4, wherein the proportion of the thickness of the nickel layer (21) in the thickness of the clad material is 2% or more.

6. The nonaqueous electrolytic secondary battery according to claim 5, wherein the thickness of the clad material is 200 µm or less, and the thickness of the nickel layer is 16 µm or more.

## Patentansprüche

1. Nicht-wässrige Elektrolyt-Sekundärbatterie (1), umfassend:
ein positives Elektrodengehäuse (6);
ein negatives Elektrodengehäuse (7), welches am positiven Elektrodengehäuse befestigt ist und einen Speicherraum (10) mit dem positiven Elektrodengehäuse zwischen dem negativen Elektrodengehäuse und dem positiven Elektrodengehäuse bildet;
einen positiven Elektrodenabschnitt (11), welcher auf dem positiven Elektrodengehäuse im Speicherraum bereitgestellt ist und eine Lithiumverbindung als ein positives Elektrodenaktivmaterial enthält;
einen negativen Elektrodenabschnitt (12), welcher auf dem negativen Elektrodengehäuse im Speicherraum bereitgestellt ist und SiOₓ (0 ≤ x < 2) als negatives Elektrodenaktivmaterial enthält; und
einen nicht-wässrigen Elektrolyt, der innerhalb des Speicherraums gespeichert ist,
wobei das negative Elektrodengehäuse enthält:
eine Basisschicht (20); und
eine Nickelschicht (21), welche in Bezug auf die Basisschicht gegenüber dem Speicherraum angeordnet ist und eine höhere Wärmeleitfähigkeit als die Basisschicht und eine Dicke von 2,6 µm oder mehr hat.

2. Nicht-wässrige Elektrolyt-Sekundärbatterie nach Anspruch 1, des Weiteren umfassend einen Anschluss (5), der durch Hitzebehandlung außerhalb des Speicherraums am negativen Elektrodengehäuse angebracht ist.

3. Nicht-wässrige Elektrolyt-Sekundärbatterie nach Anspruch 2, wobei der Anschluss (5) an das negative Elektrodengehäuse (7) bei einer Abziehfestigkeit von 2 kgf oder mehr gegen das negative Elektrodengehäuse geschweißt ist.

4. Nicht-wässrige Elektrolyt-Sekundärbatterie nach einem der Ansprüche 1 bis 3,
wobei das negative Elektrodengehäuse (7) ein Hüllmaterial beinhaltet, welches eine Dicke von 130 µm oder mehr hat, und
wobei die Basisschicht (20) eine rostfreie Stahlschicht ist, die im Hüllmaterial enthalten ist.

5. Nicht-wässrige Elektrolyt-Sekundärbatterie nach Anspruch 4, wobei der Anteil der Dicke der Nickelschicht (21) in der Dicke des Hüllmaterials 2% oder mehr ist.

6. Nicht-wässrige Elektrolyt-Sekundärbatterie nach Anspruch 5, wobei die Dicke des Hüllmaterials 200 µm oder weniger ist und die Dicke der Nickelschicht 16 µm oder mehr ist.

## Revendications

1. Batterie secondaire électrolytique non aqueuse (1) comprenant :
un boîtier d'électrode positive (6) ;
un boîtier d'électrode négative (7) qui est fixé sur le boîtier d'électrode positive et forme un espace de stockage (10) avec le boîtier d'électrode positive entre le boîtier d'électrode négative et le boîtier d'électrode positive ;
une partie d'électrode positive (11) qui est fournie sur le boîtier d'électrode positive dans l'espace de stockage et contient un composé de lithium en tant que matériau actif d'électrode positive ;
une partie d'électrode négative (12) qui est fournie sur le boîtier d'électrode négative dans l'espace de stockage et contient du SiOₓ (0 ≤ x < 2) en tant que matériau actif d'électrode négative ; et
un électrolyte non aqueux stocké à l'intérieur de l'espace de stockage,
le boîtier d'électrode négative comprenant :
une couche de base (20) ; et
une couche de nickel (21) qui est disposée de manière opposée à l'espace de stockage compte tenu de la couche de base et possède une thermo-conductivité plus élevée que la couche de base et une épaisseur de 2, 6 µm ou plus.

2. Batterie secondaire électrolytique non aqueuse selon la revendication 1, comprenant en outre un raccord terminal (5) fixé au boîtier d'électrode négative grâce à un traitement thermique en-dehors de l'espace de stockage.

3. Batterie secondaire électrolytique non aqueuse selon la revendication 2, dans laquelle le raccord terminal (5) est soudé au boîtier d'électrode négative (7) à une résistance au pelage de 2 kgf ou plus vis-à-vis du boîtier d'électrode négative.

4. Batterie secondaire électrolytique non aqueuse selon l'une quelconque des revendications 1 à 3,
dans laquelle le boîtier d'électrode négative (7) comprend un matériau de placage ayant une épaisseur de 130 µm ou plus, et
dans laquelle la couche de base (20) est une couche en acier inoxydable contenue dans la couche de placage.

5. Batterie secondaire électrolytique non aqueuse selon la revendication 4, dans laquelle la proportion de l'épaisseur de la couche de nickel (21) dans l'épaisseur du matériau de placage est de 2 % ou plus.

6. Batterie secondaire électrolytique non aqueuse selon la revendication 5, dans laquelle l'épaisseur du matériau de placage est de 200 µm ou moins, et l'épaisseur de la couche de nickel étant de 16 µm ou plus.
